Europäisches Patentamt

European Patent Office

Office européen des brevets

(11) Veröffentlichungsnummer: **0 319 792 B1**

(12) **EUROPÄISCHE PATENTSCHRIFT**

(45) Veröffentlichungstag der Patentschrift: **22.01.92**

(51) Int. Cl.⁵: **C09D 5/44**

(21) Anmeldenummer: **88119634.9**

(22) Anmeldetag: **25.11.88**

(54) **Hitzehärtbares wässriges Überzugsmittel für die kathodische Elektrotauchlackierung.**

(30) Priorität: **04.12.87 DE 3741161**

(43) Veröffentlichungstag der Anmeldung:
**14.06.89 Patentblatt 89/24**

(45) Bekanntmachung des Hinweises auf die
Patenterteilung:
**22.01.92 Patentblatt 92/04**

(84) Benannte Vertragsstaaten:
**AT BE CH DE ES FR GB IT LI NL SE**

(56) Entgegenhaltungen:
**FR-A- 2 068 616**
**US-A- 3 424 663**

**CHEMICAL ABSTRACTS, Band 76, 1972, Columbus, OH (US); S.GURUSWAMY et al., Seite 115, Nr. 114892s**

(73) Patentinhaber: **BASF Lacke + Farben Aktiengesellschaft**
**Max-Winkelmann-Strasse 80**
**W-4400 Münster(DE)**

(72) Erfinder: **Schupp, Hans, Dr.**
**Jean Voelker-Str. 40**
**W-6520 Worms 1(DE)**
Erfinder: **Schwerzel, Thomas, Dr.**
**Budapester Str. 51**
**W-6700 Ludwigshafen(DE)**
Erfinder: **Lawrenz, Dirk, Dr.**
**Neumühle**
**W-6733 Hassloch(DE)**
Erfinder: **Oslowski, Hans-Josef, Dr.**
**Heinrichstr. 5**
**W-4400 Münster(DE)**
Erfinder: **Heimann, Ulrich**
**Heideggerstr. 29**
**W-4400 Münster(DE)**

(74) Vertreter: **Welzel, Gunther, Dr. et al**
**c/o BASF Aktiengesellschaft Carl-Bosch-Strasse 38**
**W-6700 Ludwigshafen(DE)**

EP 0 319 792 B1

**Beschreibung**

Die vorliegende Erfindung betrifft hitzehärtbare wäßrige Überzugsmittel für die kathodische Elektrotauchlackierung, die ein aminogruppenhaltiges Kunstharzbindemittel, ein Vernetzungsmittel und einen niedermolekularen organischen Komplexbildner enthalten sowie ein Verfahren zu deren Herstellung und deren Verwendung.

Die meisten der heute gebräuchlichen Elektrotauchlacke mit hohem Umgriff und gutem Korrosionsschutz enthalten Amino-Epoxyharze auf Basis von Bisphenol A (2,2-Bis-(4-hydroxyphenyl)-propan) und Aminen und/oder Aminoalkoholen, wie sie z. B. in der DE-A-34 22 457, DE-A-33 25 061 und DE-A-34 44 110 beschrieben sind. Die Vernetzung dieser Bindemittel erfolgt meist thermisch bei Einbrenntemperaturen zwischen 120 und 200°C. Die Vernetzung kann durch Reaktion mit blockierten Polyisocyanaten erfolgen, wie sie beispielsweise in der DE-A-20 57 799, DE-A-21 31 060, DE-A-22 52 536, DE-A-22 65 195, DE-A-23 63 074 und DE-A-26 34 211 beschrieben sind. Harnstoffkondensationsprodukte, wie sie in der DE-A-33 11 514 beschrieben sind, können ebenfalls verwendet werden.

Eine andere Art der Vernetzung besteht in der Anwendung von phenolischen Mannichbasen, wie sie z. B. in der DE-A-34 22 257 beschrieben ist.

Trotz des insgesamt positiven Eigenschaftsbildes der so erhaltenen Lacke weisen sie in bestimmten anspruchsvollen Bereichen Mängel auf, die sie für eine Anwendung in der Karosseriebeschichtung in der Automobilindustrie, nicht geeignet erscheinen lassen. So war insbesondere die Haftung der Lackfilme auf nicht vorbehandeltem Stahlblech sowie auf sehr glatten Metalloberflächen nicht zufriedenstellend.

Eine Methode der Verbesserung der Haftung auf solchen kritischen Metalloberflächen ist in P 37 36 995.4 beschrieben worden. Dabei werden bestimmte Aminosäuren in das Trägerharz kovalent eingebaut, die eine Haftungsverbesserung bewirken sollen. Diese Art des Haftungsaufbaues erfordert oft langwierige Synthesen von Trägerharzen und ist nur auf spezielle Bindemittel anwendbar. Zudem kann der Gehalt an solchen Aminosäuren nur in einem recht engen Bereich variiert werden.

Aufgabe der vorliegenden Erfindung war es, eine einfachere universell anwendbare Methode zu finden, um eine gute Haftung der Lackfilme zu erzielen.

Es wurde nun gefunden, daß dieses Ziel durch eine Zumischung von bestimmten niedermolekularen Komplexbildnern zu der organischen Lösung vor dem Dispergierschritt oder zur fertigen Dispersion erreicht werden kann.

Gegenstand der Erfindung sind somit hitzehärtbare wäßrige Überzugsmittel für die kathodische Elektrotauchlackierung, enthaltend

(A) ein durch Protonieren mit Säure wasserverdünnbares aminogruppenhaltiges Polymerisations-, Polykondensations- oder Polyadditionsprodukt,

(B) ein Vernetzungsmittel und

(C) 0,05 bis 10 Gew.%, bezogen auf die Komponente (A) und (B), eines niedermolekularen organischen Komplexbildners,

ein Verfahren zu deren Herstellung und deren Verwendung zum Beschichten von Gegenständen mit elektrisch leitender Oberfläche.

Desgleichen bezieht sich die vorliegende Erfindung auf beschichtete Gegenstände, die durch Aufbringen der erfindungsgemäß hergestellten Überzugsmittel mittels kathodischer Elektrotauchlackierung und Einbrennen erhalten worden sind.

Zu den Aufbaukomponenten des erfindungsgemäßen Überzugsmittels ist im einzelnen folgendes zu sagen:

Als Komponente (A) können auf diesem technischen Gebiet bekannte primäre und/oder sekundäre Hydroxylgruppen und primäre, sekundäre und/oder tertiäre Aminogruppen enthaltende Kunstharzbindemittel auf Basis von Polymerisations-, Polyadditions- oder Polykondensationsprodukten wie Amino-Epoxidharze, Amino-Poly(meth)-acrylatharze und/oder Amino-Polyurethanharze mit einer Aminzahl von 30 bis 150 und einer mittleren Molmasse von 200 bis 20 000 verwendet werden. Der Einsatz von Amino-Epoxidharzen wird für Grundierungen mit hohem Korrosionsschutzniveau bevorzugt. Das Kunstharzbindemittel enthält mindestens eine Aminogruppe pro Molekül. Die untere Grenze der Aminzahl sollte bevorzugt 45, besonders bevorzugt 70 sein, die obere Grenze dagegen sollte bevorzugt bei 120, besonders bevorzugt bei 100 liegen.

Beispiele für Amino-Epoxyharze sind Umsetzungsprodukte von epoxidgruppenhaltigen Harzen mit vorzugsweise endständigen Epoxidgruppen mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Mono- oder Dialkylaminogruppe und/oder durch eine primäre Aminogruppe, die durch Ketiminisierung vorübergehend geschützt wird, modifiziert sein.

Als Epoxidharze können beliebige Materialien verwendet werden, insbesondere, wenn sie ein mittleres Molekulargewicht von 300 bis 6 000 und im Mittel 1,5 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 5 000, insbesondere 350 bis 2 000. Besonders bevorzugte Epoxidharze sind z.B. Glycidylether von im Mittel mindestens 2 phenolische Hydroxylgruppen im Molekül enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4′-Dihydroxybenzophenon, 1,1-Bis-(4-hydroxyphenyl)-ethan, 1,1-Bis-(4-hydroxyphenyl)-isobutan, 2-2-Bis-(4-hydroxy-tert.-butylphenyl)-propan, Bis-(4-hydroxynaphthyl)-methan und 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise 2,2-Bis-(4-hydroxyphenyl)-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen, wodurch die Funktionalität von 2 bis auf etwa 6 Glycidylgruppen pro Molekül gesteigert werden kann. Ebenfalls geeignet sind Polyglycidylether von mehrwertigen Alkoholen wie von Ethylenglykol, Diethylenglykol, Triethylenglykol, 1,2-Propylenglykol, 1,3-Propandiol, 1,5-Pentandiol, 1,2,6-Hexantriol, Glycerin und 2,2-Bis-(4-hydroxy-cyclohexyl)-propan. Es können auch Polyglycidylester von Polycarbonsäuren verwendet werden.

Unter den bevorzugten Polyglycidylethern von Polyphenolen sind diejenigen mit Epoxid-Äquivalentgewichten im Bereich von 180 bis 1 000 besonders bevorzugt. Aromatische Polyepoxide mit einem höheren Epoxid-Äquivalentgewicht können aus solchen mit einem niedrigen Epoxid-Äquivalentgewicht und Polyphenolen hergestellt werden.

Das Amino-Epoxidharz kann auch mit gesättigten oder ungesättigten Polycarbonsäuren und/oder Hydroxycarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure oder dimere Fettsäure. Als Hydroxyalkylcarbonsäuren werden Milchsäure, Dimethylpropionsäure oder auch Carboxyl- und hydroxylgruppenhaltige Polyester verwendet. Bei der Umsetzung von überschüssigem Polyglycidylether mit niedrigem Molekulargewicht, mit Polycarbonsäuren und/oder Polyalkoholen werden als Zwischenstufe modifizierte Polyglycidylether erhalten, die dann weiter mit Aminen und/oder Aminoalkoholen reagieren.

Es können noch heterocyclische Epoxydverbindungen verwendet werden, wie 1,3-Diglycidyl-5,5-dimethylhydantoin, Triglycidylisocyanurat oder Diepoxyde aus Bisimiden.

Das Einführen von Aminogruppen kann in einer der üblichen Reaktionen erfolgen, wie sie dem Fachmann geläufig sind und z. B. in der EP 134 983, EP 165 556 oder EP 166 314 beschrieben sind.

Geeignete Vernetzer für die erfindungsgemäßen Bindemittel sind z. B. Aminoplastharze wie Harnstoff-Formaldehyd-Harze, Melaminharze oder Benzoguanaminharze, geblockte Isocyanatvernetzer, über Esteraminolyse und/oder Umesterung härtende Vernetzer mit im Mittel mindestens 2 aktivierten Estergruppen pro Molekül, z. B. $\beta$-Hydroxyalkylester-Vernetzer gemäß EP 00 40 867 und Carbalkoxymethylester-Vernetzer gemäß der deutschen Patentanmeldung P 32 33 139.8 und Harnstoffkondensationsprodukte, wie sie in der DE-OS 33 11 514 beschrieben sind. Weitere mögliche Vernetzer bestehen aus phenolischen Mannichbasen, wie sie z. B. in der DE 34 22 457 beschrieben sind.

Das Verhältnis von Bindemittel zu Vernetzer richtet sich nach Art und Anzahl der vernetzungsaktiven Gruppen im Bindemittel und Vernetzer. Im allgemeinen wird das Bindemittel/Vernetzer-Verhältnis 1 : 9 bis 9 : 1, bevorzugt jedoch 1 : 1 bis 9 : 1, besonders bevorzugt 1,5 : 1 bis 4 : 1, bezogen auf Gewichtsteile, betragen.

Erfindungsgemäß werden der Mischung aus Bindemittel und Vernetzer niedermolekulare organische Komplexbildner zugemischt. Dabei handelt es sich im allgemeinen um Verbindungen, die zwei oder mehr als Elektronendonatoren wirkende Atome aus der Reihe O, N oder S enthalten, die so angeordnet sind, daß sie mit einem Metallion einen 5- oder 6-gliedrigen Ring aufbauen können. Sauerstoff enthaltende Gruppen sind z. B. Alkohole, Enole, Phenole, Säuren und Carbonylgruppen, Stickstoffalkylgruppen können Imine und Amine sein, wobei diese gegebenenfalls einem heterocyclischen Ring angehören können. Beispiele für schwefelhaltige Donorgruppen sind Thiole, Thiophenole und Thiocarbonylverbindungen.

Beispiele für die erfindungsgemäß eingesetzten Komplexbildner sind: Phenolderivate wie ortho-Acylphenole, o-Aminophenol, o-Nitrophenol, Pyridinderivate wie in 2-Stellung acyliertes Pyridin, 8-Hydroxychinolin, 8-Hydroxyanthron, Imidazolderivate wie Benzimidazol, Mercaptobenzimidazol, Aminoalkylbenzimidazol, Mercaptoalkylbenzimidazol, Thiazolderivate wie Mercaptobenzthiazol, Aminoalkylbenzthiazol, kondensierte Heterocyclen wie 2,2′Bipyridyl-1,10-Phenanthrolin. Bevorzugt sind Benzimidazole und Benzthiazole, besonders bevorzugt sind Derivate des Benzthiazols.

Die erfindungsgemäß eingesetzten Komplexbildner werden im allgemeinen im Bereich von 0,05 - 10 %, bevorzugt im Bereich von 0,1 - 3 %, bezogen auf die Gesamtmenge an Bindemittel und Vernetzer, verwendet. Dabei kann die Zugabe entweder vor dem Dispergierschritt erfolgen oder erst zum fertigen dispergierten Überzugsmittel.

Außer den bisher erwähnten Komponenten können weitere Stoffe wie Pigmente, Lackhilfsmittel, Lösemittel und Härtungskatalysatoren zugesetzt werden. Die so hergestellten Überzugsmittel können auch durch übliche Methoden auf Substrate wie Holz, Kunststoff oder Metall aufgebracht werden. Für die Elektrotauchlackierung wird das erfindungsgemäße Kunstharz in Verbindung mit Vernetzern und den genannten Zusatzstoffen durch Protonieren mit Säuren in eine wasserlösliche Form überführt. Als Säuren werden bevorzugt Carbonsäuren wie Ameisensäure, Essigsäure oder Milchsäure verwendet, aber auch anorganische Säuren, wie Phosphorsäure können eingesetzt werden.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen zwischen 15 und 40°C während einer Zeit von 0,5 bis 5 min. und bei pH-Werten zwischen 4,0 und 8,5, bevorzugt um den Neutralpunkt, bei Spannungen zwischen 50 und 500 Volt. Der zu beschichtende elektrisch leitende Körper wird dabei als Kathode geschaltet. Der abgeschiedene Film wird bei Temperaturen oberhalb 100°C ca. 20 Minuten gehärtet.

Beispiele

Vorprodukt 1

In einem mit Wasserabscheider und Füllkörperkolonne versehenen Gefäß wurden 12440 g Hexamethylendiamin, 18660 g dimere Fettsäure (Pripol 1014 der Fa. Unichema) 3000 g Leinölfettsäure und 2566 g Xylol zur Reaktion gebracht. Während 3-4 Stunden wurden ca. 1150 g Wasser und 1750 g Xylol abdestilliert. Das Produkt hatte eine Aminzahl von 233 mg KOH/g.

Komponente (A1)

In einem Reaktionsgefäß wurden 815 g eines Diglycidylethers aus 2,2-Bis-(4-hydroxyphenyl)-propan und Epichlorhydrin mit einem Equivalentgewicht von 188, 214,4 g Bisphenol A und 53,6 g Propylglykolmonophenylethermit 0,26 g Triphenylphosphin zur Reaktion gebracht. Bei einer Reaktionstemperatur von 130°C wurde nach 3 Stunden ein Produkt mit einem Epoxidequivalentgewicht von 429 erhalten. Mit 302 g Isobutanol und 212,4 g Toluol wurde verdünnt und auf 60°C gekühlt. Anschließend wurden 70,8 g Methylethanolamin und 351,6 g des Vorproduktes 1 zugegeben und auf 80°C erhitzt. Nach 2 Stunden war kein Epoxid mehr nachzuweisen. Das Kunstharz hatte eine Aminzahl von 105 mg KOH/g, einen Festkörpergehalt von 70 Gew.% und eine Platte/Kegel-Viskosität von 4000 mPas bei 75°C.

Vorprodukt 2

In einem mit einem Wasserabscheider versehenen Gefäß wurden 662 g des Vorproduktes 1 mit 566 g Methylisobutylketon zum Rückfluß erhitzt. Dabei wurden in 10 Stunden ca. 52 g Wasser abdestilliert. Das Produkt hatte eine Aminzahl von 134 und einen Lösemittelanteil von 25 Gew.%.

Komponente (A2)

In einem Reaktionsgefäß wurden 752 g eines Diglycidylethers aus 2,2-Bis-(4-hydroxyphenyl)-propan und Epichlorhydrin mit einem Equivalentgewicht von 190, 205 g Bisphenol A und 50 g Propylglykolmonophenylether mit 0,3 g Triphenylphosphin zur Reaktion gebracht. Bei einer Reaktionstemperatur von 130°C wurde nach 3 Stunden ein Produkt mit einem Epoxidequivalentgewicht von 430 erhalten. Mit 118 g Toluol wurde auf einen Festkörpergehalt von 85 Gew.% verdünnt. Anschließend wurden 598 g Vorprodukt 2 und 72 g Ethylethanolamin zugegeben und auf 120°C erhitzt. Nach 5 Stunden war kein Epoxid mehr nachweisbar. Mit 273 g eines 9 : 1-Gemisches aus Isobutanol und Ethylenglykolmono-n-butylether wurde auf einen Festkörpergehalt von 70 Gew.% verdünnt.

Vernetzungsmittel 1 (blockiertes Isocyanat)

666 g Isophorondiisocyanat wurden mit 537 g Toluol und 0,28 g Dibutylzinndilaurat auf 60°C erhitzt. Während 90 Minuten wurden 67 g 1,1,1-Trimethylolpropan und 133 g eines Umsetzungsproduktes aus ca. 3 mol Ethylenoxid und einem mol 1,1,1-Trimethylolpropan zugegeben. Nach weiterer 30 Minuten Reaktionszeit bei 60°C wurden 387 g Di-n-butylamin zugegeben. Die Mischung wurde 60 Minuten bei 50°C gerührt. Der Vernetzer hatte einen Feststoffgehalt von 70 Gew.%.

Vernetzungsmittel 2 (phenolische Mannichbase)

152 g Bisphenol A, 63 g eines Diglycidylethers von Bisphenol A mit einem Epoxidequivalentgewicht von 189 und 0,1 g Tributylphosphin wurden 1 Stunde auf 160°C erhitzt. Nach dieser Zeit ließ sich kein Epoxid mehr nachweisen, und es war ein kettenverlängertes Diphenol entstanden. Dazu wurden 53,8 g Isopropanol, 129 g Di-n-butylamin 31,5 g Paraformaldehyd und 17,6 g Isobutanol gegeben und 2 Stunden auf 80°C erhitzt. Das Produkt hatte einen Feststoffgehalt von 80 Gew.%.

Herstellung einer Pigmentpaste

640 g eines Bisphenol A-Epoxidharzes mit einem Epoxidequivalentgewicht von 485 und 160 g eines solchen mit einem Epoxidequivalentgewicht von 189 wurden bei 100°C gemischt. In einem weiteren Gefäß wurden 452 g Hexamethylendiamin vorgelegt, auf 100°C erhitzt und 720 g der obigen heißen Epoxidharzmischung innerhalb einer Stunde zugegeben, wobei leicht gekühlt werden mußte, um die Temperatur bei 100°C zu halten. Nach weiteren 30 Minuten wurde unter Temperaturerhöhung und vermindertem Druck das überschüssige Hexamethylendiamin abgezogen, wobei zum Schluß eine Temperatur von 205°C und ein Druck von 30 mbar erreicht wurde. Anschließend wurden 57,6 g Stearinsäure, 172,7 g dimere Fettsäure und 115 g Xylol zugesetzt. Dann wurde innerhalb von 90 Minuten bei 175 bis 180°C das gebildete Wasser azeotrop abdestilliert. Anschließend wurden 58 g Ethylenglykolmono-n-butylether und 322 g Isobutanol zugefügt. Das Produkt hatte einen Feststoffgehalt von 70 Gew.% und eine Viskosität, gemessen bei 75°C mit einem Platte-Kegel-Viskosimeter, von 2240 mPas.

110 g des so erhaltenen Kunstharzes wurden in einer Kugelmühle zusammen mit 36 g Ethylenglykolmono-n-butylether, 3 g Essigsäure, 170 g Titandioxid, 18 g Bleisilikat, 4,5 g Ruß und 170 g Wasser bis zu einer Kornfeinheit von < 7 $\mu$m vermahlen.

Dispersionsherstellung

Die jeweiligen (A)-Komponenten wurden mit den angegebenen Vernetzungsmitteln in solchen Mengen gemischt, daß die resultierende Mischung 137 g Feststoff im Mischungsverhältnis 70 Gew.% (A)-Komponente und 30 Gew.% Vernetzungskomponente (B) enthält. Nach Zugabe von 3,1 g Essigsäure wurde mit entionisiertem Wasser unter Rühren eine 35 gew.%ige Dispersion hergestellt. Dazu wurden 139 g der oben angegebenen Pigmentpaste gegeben und mit entionisiertem Wasser auf 1000 g aufgefüllt. Die so hergestellten Elektrotauchbäder wurden 7 Tage bei 30°C gerührt. Dann wurde bei der angegebenen Spannung während 2 Minuten ein als Kathode geschaltetes Blech beschichtet und anschließend während 20 Minuten bei 160°C eingebrannt.

Die folgenden Beispiele zeigen die Anwendung der erfindungsgemäßen Bindemittelzusammensetzungen in kathodisch abscheidbaren Elektrotauchlacken:

Beispiele 1-2

70 Teile Komponente A 1
30 Teile Vernetzungsmittel 1
 1 Teil  Komplexbildner: Beispiel 1: Mercaptobenzthiazol
                          Beispiel 2: Mercaptobenzimidazol

Vergleichsbeispiel 1:
wie Beispiele 1 und 2,
jedoch ohne Zusatz von
Komplexbildner

| | Vergleichs-beispiel 1 | Beispiel 1 | Beispiel 2 |
|---|---|---|---|
| Baddaten: | | | |
| pH-Wert | 7,6 | 7,4 | 7,4 |
| Leitfähigkeit ($\mu$S x cm$^{-1}$) | 2240 | 2440 | 2220 |
| Abscheidespannung (V) | 270 | 250 | 260 |
| Filmeigenschaften: | | | |
| Schichtdicke ($\mu$m) | 22 | 18 | 20 |
| Unterrostung (mm) | | | |
| 480 h ASTM * | | | |
| unbehandeltes Blech | 4,85 | 1,3 | 1,6 |
| 1000 h ASTM * | | | |
| phosphatiertes Blech | 0,35 | 0,16 | 0,6 |
| 10 Zyklen Klimawechsel-test ** | 0,71 | 0,42 | 1,3 |

*  Salzsprühtext nach DIN 50021
** nach Prüfblatt UDA 621415

Beispiele 3

70 Teile Komponente A 2
30 Teile Vernetzungsmittel 2
200 ppm Cu-Acetat
1 Teil Mercaptoimidazol als Komplexbildner

Vergleichsbeispiel 2:
wie Beispiel 3, jedoch
ohne Zusatz eines
Komplexbildners

|  | Vergleichs-beispiel 2 | Beispiel 3 |
|---|---|---|
| Baddaten: pH-Wert | 7,14 | 7,44 |
| Leitfähigkeit ($\mu$S x cm$^{-1}$) | 2450 | 2620 |
| Abscheidespannung (V) | 240 | 240 |
| Filmeigenschaften: | | |
| Schichtdicke ($\mu$m) | 18 | 19 |
| Unterrostung (mm) | | |
| 480 h ASTM unbehandeltes Blech | 3,87 | 2,08 |
| 1000 h ASTM phosphatiertes Blech | 0,2 | 0,21 |
| 10 Zyklen Klimawechseltest | 0,46 | 0,46 |

**Patentansprüche**

1. Hitzehärtbares, wäßriges Überzugsmittel für die kathodische Elektrotauchlackierung, enthaltend
   (A) ein durch Protonieren mit Säure wasserverdünnbares aminogruppenhaltiges Polymerisations-, Polykondensations- oder Polyadditions- produkt als Bindemittel
   (B) ein Vernetzungsmittel und
   (C) 0,05 bis 10 Gew.-%, bezogen auf die Komponente (A) und (B), eines niedermolekularen organischen Komplexbildners,
   wobei das Verhältnis von Bindemittel zu Vernetzer 1:9 bis 9:1, bezogen auf Gewichtsteile, beträgt.

2. Überzugsmittel nach Anspruch 1, enthaltend als Komplexbildner (C) eine aromatische Verbindung mit mindestens zwei gleichen oder verschiedenen N-, O- oder S-Atomen.

3. Überzugsmittel nach Anspruch 1, enthaltend als Komplexbildner (C) einen aromatischen Heterocyclus mit N-, O- oder S-Atomen im Ring.

4. Überzugsmittel nach Anspruch 1, enthaltend als Komplexbildner (C) Heterocyclen mit maximal zwei Heteroatomen im Ring.

5. Überzugsmittel nach Anspruch 1, enthaltend als Komplexbildner (C) Derivate des Imidazols.

7

**6.** Überzugsmittel nach Anspruch 1, enthaltend als Komplexbildner (C) Derivate des Thiazols.

**7.** Überzugsmittel nach einem der Ansprüche 1 bis 6, enthaltend zusätzlich übliche Pigmente, Füllstoffe, Lackhilfsmittel und/oder Lösemittel.

**8.** Verfahren zur Herstellung eines Überzugsmittels gemäß einem der Ansprüche 1 bis 7 durch Protonierung eines Gemisches aus

(A) einem aminogruppenhaltigen Polymerisations-, Polykondensations- oder Polyadditionsprodukt als Bindemittel und
(B) einem Vernetzungsmittel

mit einer Säure und anschließender Dispergierung mit Wasser, dadurch gekennzeichnet, daß man den organischen niedermolekularen Komplexbildner (C) vor der Dispergierung dem Gemisch zusetzt.

**9.** Beschichteter Gegenstand, erhältlicn unter Verwendung eines Überzugsmittels gemäß einem der Ansprüche 1 bis 7.

## Claims

**1.** A heat-curable aqueous coating composition for cathodic electrocoating, containing
(A) an amino-containing polycondensation or polyaddition product as binder which becomes water-dilutable on protonation with an acid,
(B) a crosslinking agent and
(C) from 0.05 to 10% by weight, based on components (A) and (B), of a low molecular weight organic complexing agent, the binder:crosslinker ratio being from 1:9 to 9:1, based on parts by weight.

**2.** A coating agent as claimed in claim 1, containing as complexing agent (C) an aromatic compound having at least two identical or different N, O or S atoms.

**3.** A coating agent as claimed in claim 1, containing as complexing agent (C) an aromatic heterocycle having N, O or S atoms in the ring.

**4.** A coating agent as claimed in claim 1, containing as complexing agent (C) a heterocycle having not more than two hetero atoms in the ring.

**5.** A coating agent as claimed in claim 1, containing as complexing agent (C) a derivative of imidazole.

**6.** A coating agent as claimed in claim 1, containing as complexing agent (C) a derivative of thiazole.

**7.** A coating agent as claimed in any of claims 1 to 6, containing in addition a customary pigment, filler, coating assistant and/or solvent.

**8.** A process for preparing a coating agent as claimed in any of claims 1 to 7, by protonation of a mixture of
(A) an amino-containing polycondensation or polyaddition product as binder and
(B) a crosslinking agent,
with an acid and subsequent dispersion with water, which comprises adding the organic low molecular weight complexing agent (C) to the mixture prior to dispersion.

**9.** A coated article obtainable using the coating agent as claimed in any of claims 1 to 7.

## Revendications

**1.** Agent de revêtement aqueux, thermodurcissable, pour le laquage par trempage électrophorétique cathodique, qui contient

(A) à titre de liant, un produit de polymérisation, de polycondensation ou de polyaddition contenant des radicaux amino, diluable à l'eau, par protonation avec un acide,

(B) un agent de réticulation et

(C) de 0,05 à 10% en poids, par rapport aux composants (A) et (B), d'un agent de complexation organique, à faible masse moléculaire,

où le rapport du liant à l'agent de réticulation varie de 1:9 à 9:1, sur la base de parties pondérales.

2. Agent de revêtement selon la revendication 1, qui contient, à titre d'agent de compexation (C), un composé aromatique avec au moins deux atomes d'azote, d'oxygène ou de soufre, identiques ou différents.

3. Agent de revêtement suivant la revendication 1, qui contient, à titre d'agent de complexation (C), un hétérocycle aromatique avec des atomes d'azote, d'oxygène ou de soufre dans le noyau.

4. Agent de revêtement suivant la revendication 1, qui contient, à titre d'agent de complexation (C), des hétérocycles avec au moins deux hétéroatomes dans le noyau.

5. Agent de revêtement suivant la revendication 1, qui contient, à titre d'agent de complexation (C), des dérivés de l'imidazole.

6. Agent de revêtement suivant la revendication 1, qui contient, à titre d'agent de complexation (C), des dérivés du thiazole.

7. Agent de revêtement suivant l'une quelconque des revendications 1 à 6, qui contient complémentairement des solvants, des auxiliaires de laquage, des charges et/ou des pigments usuels.

8. Procédé de fabrication d'un agent de revêtement selon l'une quelconque des revendications 1 à 7, par protonation d'un mélange constitué de

(A) un produit de polymérisation, de polycondensation ou de polyaddition contenant des radicaux amino à titre de liant et

(B) un agent de réticulation

à l'aide d'un acide et dispersion subséquente avec de l'eau, caractérisé en ce que l'on ajoute l'agent de complexation (c) organique et à faible masse moléculaire au mélange avant la dispersion.

9. Objet revêtu, que l'on peut obtenir par l'utilisation d'un agent de revêtement selon l'une quelconque des revendications 1 à 7.